Europäisches Patentamt

(19) European Patent Office

Office européen des brevets

(11) Publication number: **0 215 636**
**A2**

(12) **EUROPEAN PATENT APPLICATION**

(21) Application number: **86306977.9**

(22) Date of filing: **10.09.86**

(51) Int. Cl.⁴: **B 65 H 51/14**

(30) Priority: **11.09.85 US 774672    11.09.85 US 774767**

(43) Date of publication of application:
**25.03.87 Bulletin 87/13**

(84) Designated Contracting States: **DE FR GB SE**

(71) Applicant: **ILLINOIS TOOL WORKS INC.**
**8501 West Higgins Road**
**Chicago Illinois 60631 (US)**

(72) Inventor: **Bishop, Bernard F.**
**3801 North Lowell**
**Chicago Illinois 60641 (GB)**

**Diener, Walter C.**
**10620 W- Nevada**
**Leyden Township Illinois 60164 (US)**

**Gaubatz, Tommy L.**
**156 B. West Golf Road**
**Illinois 60048 (US)**

**Stiefel, Michael S.**
**8536 N. Avers**
**Skokie Illinois 60076 (US)**

(74) Representative: **Gordon, Michael Vincent et al**
**GILL JENNINGS & EVERY 53-64 Chancery Lane**
**London WC2A 1HN (GB)**

(54) **Drive belts for a linear cable drive mechanism.**

(57) Drive belts (16,36) are disclosed for a linear motion drive system in which a plurality of the drive belts are helically disposed and rotated about a driven element (14,34) to advance the driven element along its axis without rotation. The belts include a pair of spaced legs (32,42) which resiliently abut legs of adjacent belts to space the belts equally about the periphery of the driven element, and to facilitate use with changes in diameter of the driven element.

Fig. 2

Fig. 5

**Description**

## DRIVE BELTS FOR A LINEAR CABLE DRIVE MECHANISM

This invention relates to drive belts, and in particular to drive belts for use in a linear cable drive mechanism, in which a plurality of the drive belts are helically wrapped around a generally elongate driven element.

An example of such a cable drive mechanism is shown in U.S. patent 4,274,574. Such mechanisms employ a plurality of drive assemblies, each including a set of pulleys and a drive belt, to advance an elongate driven element along its longitudinal axis. Each of the drive belts is wrapped helically about the driven element such that simultaneous rotation of the drive assemblies and lengthwise movement of the drive belts causes advancement of the driven element without rotation thereof.

The path travelled by drive belts in such systems causes the belts to undergo a variety of stresses. Fleet angle fluctuations, small pulley radii, and substantial twisting of the drive belts are examples of factors which contribute to difficulties in belt design.

A characteristic of cable drive mechanisms which utilize helically disposed belts is that as tension in the belts increases, there is a tendency for the belts to straighten, and for the driven element to dis-engage itself from contact with the drive belts. It is desirable to maintain even spacing of the drive belts about the driven element. Furthermore, because of variations in diameter in the driven element, there is a need to balance circumferential forces between the belts.

A drive belt according to the present invention, for use in a linear cable drive mechanism in which a plurality of the drive belts are helically wrapped around a generally elongate driven element, comprises a continuous loop which is characterised by including resilient lateral adjustment means for facilitating use with portions of the driven element of different cross section.

There may be at least one encapsulated strength member and/or at least one exposed portion of a surface reinforcing fabric.

Preferably, the resilient lateral adjustment means includes two legs, capable of moving resiliently towards and away from each other.

In one embodiment: there are two of the strength members, which are encapsulated in a free end of each of the legs; there are two portions of the fabric, which are located on a free end of each of the legs; and the legs are joined by a connecting section to present an overall generally U-shaped cross section for the drive belt, the free ends of the legs being intended to bear against and frictionally engage the driven element during use.

In another embodiment: the two legs are joined by a continuous central section having a curved surface which is intended to bear against and frictionally engage the driven element during use; the or each of the strength members is encapsulated in the central section; there is one portion of the fabric located on the curved surface of the central section; the legs extend generally radially outwardly from opposite ends of the curved surface of the central section; and the central section includes a generally radially outwardly extending protuberant portion to present an overall generally W-shaped cross section for the drive belt.

In either embodiment there may be inter-locking means for use in positively engaging the inter-locking means of a similar drive belt when helically wrapped around the driven element, the inter-locking means including a continuous protrusion along one side of the drive belt, and a similarly shaped continuous groove along an opposite side of the drive belt.

Preferably, the drive belts of the present invention are characterised by being formed of a water resistant material such as a moulded polyurethane.

Two drive belts, according to the present invention, will now be described, by way of example only, with reference to the accompanying drawings, in which:-

Figure 1 is a side elevational view in partial section showing a portion of a drive system in which the present invention is usable;

Figures 2, 3 and 4 are cross sectional views of driven elements of various diameters driven by one drive belt of the present invention; and

Figures 5,6 and 7 are cross sectional views of a driven element of various diameters driven by an alternative drive belt of the present invention.

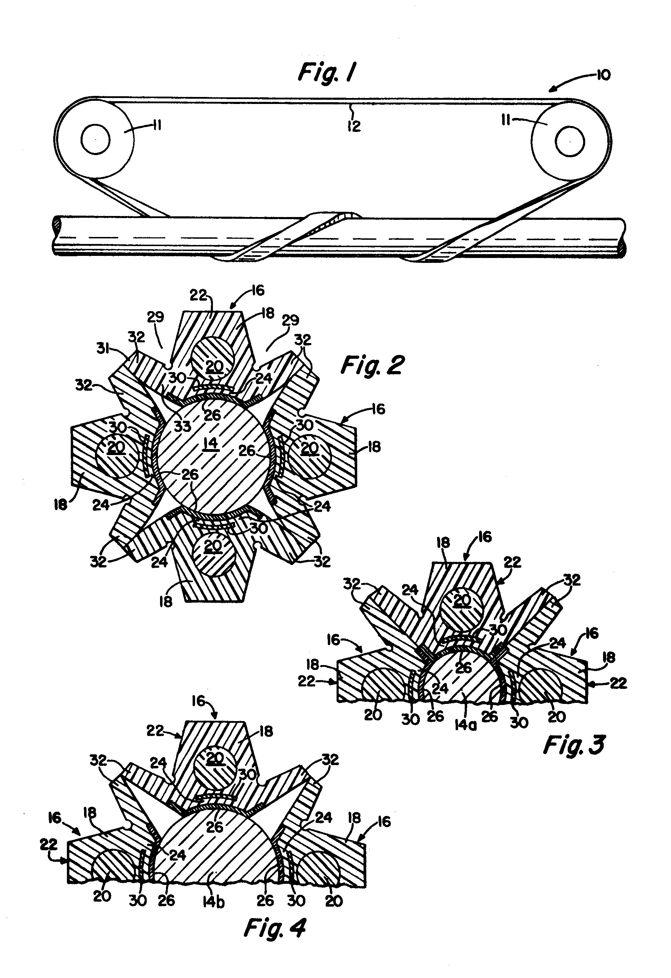

A drive assembly of the type described in more detail in U.S. patent 4,274,574 (hereinafter referred to as the "Bishop patent") which is incorporated herein by reference, is shown in Figure 1. The Bishop patent describes a linear drive mechanism in which a plurality of drive assemblies are used to advance a driven element along its axis without imparting rotational movement thereto.

Figure 1 shows a drive assembly 10, similar to the one of the Bishop patent, comprised of a pair of pulleys 11 and a belt 12. For purposes of illustration, the belt 12 in Figure 1 is shown schematically as a flat member in order to show the twisting which necessarily occurs between each of the pulleys 11 and the driven element. A complete drive system is usually comprised of a plurality of belts which substantially surround the driven element.

Figure 2 shows a driven element 14 with four W-shaped belts 16 disposed at equal intervals about the circumference of the driven element 14. Each belt 16 is comprised of a moulded polyurethane outer portion or casing 18 and a strength member 20 having a generally circular cross section, preferably comprised of a low elongation DACRON (registered trade mark) material. The strength member 20 is centered in an enlarged or protuberant body portion 22 of the belt 16. The legs 32 define a large groove 29 on the upper part of the belt 16. The groove 29 is separated into two parts by the protuberant body portion 22 and the strength member 20.

The inner portions 24 of the belts contact the driven element, and preferably have a surface reinforcement 26 made of woven nylon fabric.

Between the reinforcement 26 and the strength member 20 is a second strength member 30 made of a generally flat aromatic polyamide fibre material such as KEVLAR (registered trade mark) ribbon. The flexible legs 32 are generally tapered such that outer portions 31 are thinner than inner portions 33 thereof. It should be noted that the body portion 22 is similarly tapered. The inner portion 24 of the belt 16, generally moulded to an arcuate shape, matches the curvature of the driven element 14 as shown in Figure 2.

Driven elements of the type contemplated for use with the present invention, generally include some section of varying cross sectional diameter. In Figure 2 the belts 16 are shown surrounding a normal section of a driven element 14. In Figure 2 the legs 32 are in light abutting contact with legs of adjacent belts. Such abutting contact tends to equally space the plurality of belts 16 about the driven element 14. Also, the inner portion 24 of the belt 16, particularly the part containing the fabric 26 is in continuous contact with the periphery of the driven element 14. It should be noted that the vast majority of the driven element 14 has a cross section of the type shown in Fig. 2. Therefore, the normal configuration of the legs 32 is in the slightly flexed configuration shown in Fig. 2.

Fig. 3 shows a narrowed section 14a of the driven element 14 with a diameter substantially less than the diameter of the element as shown in Fig. 2. When the belts 16 surround a narrowed section 14a of the driven element 14, the legs 32 are in significantly increased abutting contact. Nevertheless, the inner portion 24 of each belt, and the corresponding fabric 26, conform to the smaller shape of the narrowed section 14a. The legs 32 are sufficiently resilient to allow the inner portions 24 to move inwardly when a narrowed section 14a is encountered. The centering function of the legs operates to equally space the belts 16 about the periphery of the narrowed section 14a of the driven element 14.

Fig. 4 shows an enlarged section 14b of the driven element 14. In this case, the legs 32 of the adjcent belts 16 may only be adjacent, or in very slight abutting contact. Again, the resilient nature of the casing 18 allows the inner portions 24 and the associated fabric 26 to conform to the enlarged (less curved) section 14b of the driven element 14. When an enlarged section 14b of the driven element 14 is encountered, the resilient legs 32 again serve to equally space the belts around the driven element 14.

In the embodiment of the invention as shown in Figs. 2, 3 and 4, the flat strength member 30 tends to evenly distribute radially inward forces. Because of the frequent flexing of the legs 32, the juncture between the leg 32 and its associated body portion 22 may be provided with a fillet in order to reduce stress concentrations and the likelihood of tearing. It should be noted that stopping and starting of the drive assemblies causes significant variations in fleet angle where the belts meet associated pulleys. The flexible nature of the resilient legs 32 in addition to providing the spacing function discussed above, reduces belt wear caused by fleet angle variations.

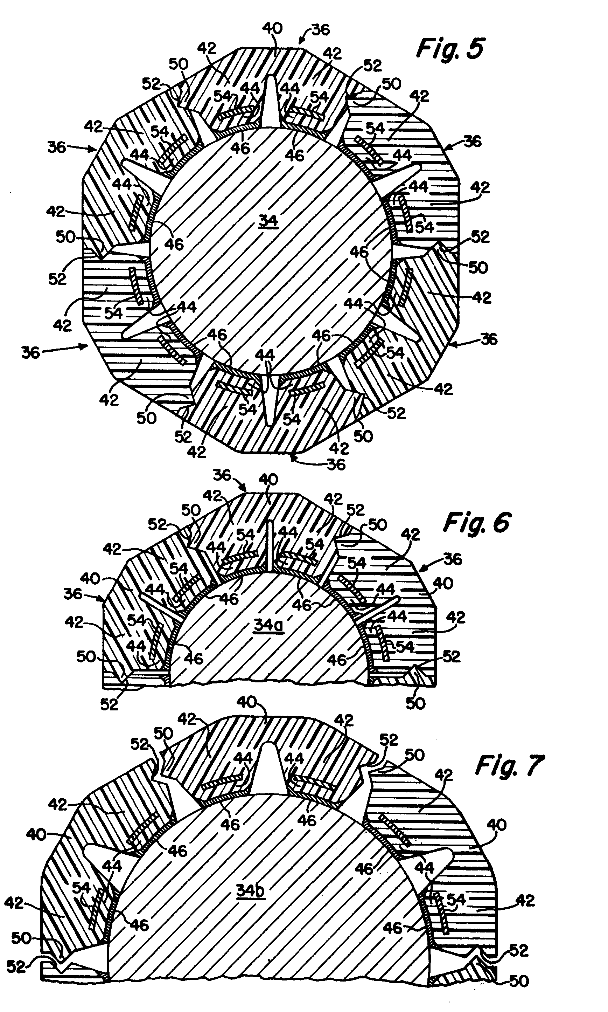

Figs. 5, 6 and 7 show an alternative embodiment of the present invention. In Fig. 5 a plurality of six belts 36 surround a large driven element 34. The belts 36 are each comprised of two resilient legs 42 which are joined by a resilient center section 40. Each of the legs 42 is generally tapered from an inner free end 44 which carries an integrally molded fabric 46 of the type mentioned above, to a thicker end 48 which is adjacent to the center section 40. Each of the legs 42 is molded around a flat strength member 54 made of an aromatic polyamide material such as KEVLAR® ribbon. Each of the belts 36 includes an interlocking rib 50 and similarly shaped groove 52. Each rib 50 fits into the corresponding groove 52 of an adjacent belt when the belts surround the driven member 34.

As discussed above the driven element 34 contains sections of smaller and larger diameters. Therefore, the belt 36 of the present invention is designed to accommodate these differing diameters. Fig. 6 shows a narrowed section 34a of the driven element 34. Space between the legs 42 is reduced, and the legs 42 are less compressed, which reduces the overall width of each belt. The reduced width of the belts allows the same number of belts to fit around the driven element 34, while allowing the belts 36 to tightly encapsulate the driven element 34. The interlocking ribs 50 and grooves 52 prevent distortion of tne total belt configuration.

Fig. 7 shows an enlarged section 34b of the driven element 34. When the drive assembly encounters an enlarged section of the driven element 34, the belts 36 undergo increased tension. This increased tension results in compression and widening of the belts 36. The resilient nature of the belts 36 and legs 42 tends to cause equal spacing of the belts 36 about the driven element 34.

When the belts 36 encounter sections of the driven element 34 of varying diameters, the resilient legs 42 pivot about the resilient section 40, and the legs 42 change their cross sectional shape to facilitate encapsulation and equal spacing of the belts about the driven element 34. The belt of Figs. 5, 6 and 7 has an inner portion or bearing surface which is capable of conforming to the varying shapes of a driven element. The radius of curvature of the bearing surfaces in Figs. 5, 6 and 7 are 1-1/2, 1-1/4 and 2 inches, (3.81, 3.17 and 5.08 cm), respectively.

It should be noted that while the belt shown in Figures 2,3 and 4 includes a large protuberant body portion 22, it may be desirable to reduce the overall thickness of the belt by eliminating the round strength member 20, leaving only the flat strength member 30 so that only the large groove 29 would separate the resilient legs 32.

It should also be noted that the free ends 44 of the legs 42 shown in Figures 5,6 and 7 may be curved in a direction normal to the axis of the belt 36.

**Claims**

1. A drive belt (16; 36), for use in a linear cable drive mechanism (10) in which a plurality of the drive belts are helically wrapped around a generally elongate driven element (14; 34), the drive belt (16; 36) comprising a continuous loop which is characterised by including resilient lateral adjustment means (32; 42) for facilitating use with portions of the driven element (14; 34) of different cross section (14a,14b; 34a,34b).

2. A drive belt according to claim 1, characterised by including at least one encapsulated strength member (20,30—).

3. A drive belt according to claim 1 or claim 2, characterised by including at least one exposed portion of a surface reinforcing fabric (26; 46).

4. A drive belt according to any preceding claim, characterised in that the resilient lateral adjustment means includes two legs (32; 42), capable of moving resiliently towards and away from each other.

5. A drive belt according to claim 2 and claim 4, characterised in that there are two of the strength members (54), which are encapsulated in a free end (44) of each of the legs (42).

6. A drive belt according to claim 3 and claim 4, characterised in that there are two portions of the fabric (46), which are located on a free end (44) of each of the legs (42).

7. A drive belt according to any one of claims 4 to 6, characterised in that the legs (42) are joined by a connecting section (40) to present an overall generally U-shaped cross section for the drive belt (36), the free ends (44) of the legs (42) being intended to bear against and frictionally engage the driven element (34) during use.

8. A drive belt according to claim 4, characterised in that the two legs (32) are joined by a continuous central section (24) having a curved surface which is intended to bear against and frictionally engage the driven element (14) during use.

9. A drive belt according to claim 2 and claim 8, characterised in that the or each of the strength members (20,30) is encapsulated in the central section (24).

10. A drive belt according to claim 3 and claim 8, characterised in that there is one portion of the fabric (26) located on the curved surface of the central section (24).

11. A drive belt according to any one of claims 8 to 10, characterised in that the legs (32) extend generally radially outwardly from opposite ends of the curved surface of the central section (24).

12. A drive belt according to any one of claims 8 to 11, characterised in that the central section (24) includes a generally radially outwardly extending protuberant portion (22) to present an overall generally W-shaped cross section for the drive belt (16).

13. A drive belt according to any preceding claim, characterised by including inter-locking means (50,52) for use in positively engaging the inter-locking means (50,52) of a similar drive belt (36) when helically wrapped around the driven element (34).

14. A drive belt according to claim 13, characterised by the inter-locking means including a continuous protrusion (50) along one side of the drive belt, and a similarly shaped continuous groove (52) along an opposite side of the drive belt.

15. A drive belt according to any preceding claim, characterised by being formed of a water resistant material such as a moulded polyurethane.

86306977 9

Fig. 1

Fig. 2

Fig. 3

Fig. 4

Fig. 5

Fig. 6

Fig. 7